# EUROPÄISCHE PATENTSCHRIFT

(11) **EP 2 418 580 B1**
(45) Veröffentlichungstag und Bekanntmachung des Hinweises auf die Patenterteilung: **10.10.2012**
(21) Anmeldenummer: 10172378.1
(22) Anmeldetag: 10.08.2010
(51) Int. Cl.: G06F 11/20

(54) **Verfahren zum Betreiben eines Netzwerkes und Netzwerk**
Method for operating a network and network
Procédé destiné au fonctionnement d'un réseau et réseau

(43) Veröffentlichungstag der Anmeldung: 15.02.2012
(73) Patentinhaber: SIEMENS AKTIENGESELLSCHAFT, 80333 München (DE)
(72) Erfinder: Barthel, Herbert, 91074, Herzogenaurach (DE); Griessbaum, Reiner, 76761, Rülzheim (DE); Ramm, Enrico, 09117, Chemnitz (DE)

(56) Entgegenhaltungen:
- WO-A2-2006/033882
- US-A1- 2008 178 037

## Beschreibung

Die Erfindung betrifft ein Verfahren zum Betreiben eines Netzwerkes mit zwei Steuergeräten und wenigstens einem Peripheriegerät sowie ein solches Netzwerk.

Zur Steuerung von Fertigungsanlagen und ähnlichem werden auf an sich bekannte Weise Netzwerke verwendet, die oftmals auf dem so genannten Feldbusstandard beruhen. Um kostenintensive Ausfälle oder gar Unfälle, die aus einem Steuerungsausfall der Fertigungsanlage resultieren können, zu vermeiden, ist es dabei von besonderer Bedeutung, eine besonders hohe Verfügbarkeit des Netzwerkes und seiner Komponenten sicherzustellen. Es ist daher üblich, zwei redundante Steuergeräte bereitzustellen, von denen jeweils eines als aktives Steuergerät Steuersignale an die restlichen Komponenten des Netzwerks abgibt, wobei das jeweils andere als Backupsteuergerät dient und lediglich bei einem Ausfall des ersten Steuergerätes die Steuerung der Anlage übernimmt.

Bei komplexen Anlagen ist es dabei von Bedeutung, dass auch das Backupsteuergerät jederzeit über den Zustand der Anlage informiert ist, so dass es beim Ausfall des Hauptsteuergerätes nahtlos die Steuerung übernehmen kann. Zu diesem Zweck findet eine Synchronisation zwischen den Steuergeräten statt. Das Backupsteuergerät kann durch die Synchronisation zudem feststellen, ob das Hauptsteuergerät noch aktiv ist.

Hierbei besteht allerdings das Problem, dass bei einem Ausfall der Synchronisation zwischen den Steuergeräten das Backupsteuergerät nicht entscheiden kann, ob tatsächlich das Hauptsteuergerät oder lediglich die Synchronisation ausgefallen ist. Ist das Hauptsteuergerät bei ausgefallener Synchronisation noch aktiv, so darf das Backupsteuergerät nicht die Steuerung der Anlage zu übernehmen versuchen, da sonst widersprüchliche Steuersignale von beiden Steuergeräten an die Komponenten des Netzwerkes gesendet werden könnten. Das Netzwerk kann hierdurch in einen undefinierten Zustand gelangen, was ebenfalls zu einem Ausfall oder gar zu Beschädigungen der Anlage führen kann. Daher ist es üblich, Synchronisationseinrichtung und Synchronisationsleitungen zwischen den beiden Steuergeräten redundant auszulegen.

Dies erhöht nachteiligerweise jedoch den Herstellungsaufwand eines derartigen Netzwerkes. Zudem kann es auch bei einer redundanten Synchronisationsleitung bzw. Synchronisationseinrichtung vorkommen, dass das Hauptsteuergerät noch aktiv ist, während gleichzeitig beide Synchronisationsleitungen bzw. - einrichtungen ausgefallen sind. Auch hier tritt wieder das Problem auf, dass beide Steuergeräte gleichzeitig versuchen können, die Steuerung der Anlage zu übernehmen.

Aus der WO 2006/033882 A ist ein Verfahren zum Betreiben eines Netzwerks bekannt, bei welchem Applikationen auf einem ersten Steuergerät durchgeführt werden, während ein zweites Steuergerät inaktiv ist. Ein Beobachterprozess auf dem ersten Steuergerät beobachtet den Zustand der Applikationen und informiert bei einem Laufzeitfehler das zweite Steuergerät, welches darauf hin aktiv wird und selbst die Applikationen ausführt. Zusätzlich wird der Applikationsstatus zwischen dem ersten und dem zweiten Steuergerät regelmäßig synchronisiert.

Die US 2008 0 178 037 A beschreibt ein Verfahren zum Detektieren der Verfügbarkeit von redundanten Komponenten eines Kommunikationssystems. Für jedes Steuergerät dieses Systems ist ein redundantes Gerät vorgesehen. Um zu verhindern, dass im redundanten Steuergerät Fehler auftreten, die undetektiert bleiben, wird keines der Geräte in einem vollständig inaktiven Standby-Betrieb betrieben, sondern jedes der beiden Steuergeräte übernimmt zumindest eine Teilaufgabe der Steuerung, so dass bei einem Ausfall in einem der Geräte diese Teilaufgabe auf das jeweils andere übertragen werden kann.

Der vorliegenden Erfindung liegt somit die Aufgabe zugrunde, ein Verfahren sowie ein Netzwerk der eingangs genannten Art bereitzustellen, welche einen besonders zuverlässigen und konfliktfreien Betrieb eines Netzwerkes mit zwei Steuergeräten ermöglichen.

Diese Aufgabe wird durch ein Verfahren mit den Merkmalen des Patentanspruchs 1 sowie durch ein Netzwerk mit den Merkmalen des Patentanspruchs 11 gelöst.

Bei einem solchen Verfahren zum Betreiben eines Netzwerks mit zwei Steuergeräten und wenigstens einem Peripheriegerät befindet sich jedes der Steuergeräte bezüglich des Peripheriegeräts entweder in einem Aktivbetriebszustand in welchem Steueranweisungen an das Peripheriegerät sendet, oder in einem Ruhebetriebszustand, in welchem es keine Steueranweisungen an das Peripheriegerät sendet. Die Steuergeräte sind dabei bezüglich des Peripheriegeräts immer in jeweils unterschiedlichen Betriebszuständen. Mit anderen Worten fungiert eines der Steuergeräte bezüglich des Peripheriegeräts immer als Hauptsteuergerät, während das jeweils andere Steuergerät die Backupfunktion übernimmt. Dasjenige der Steuergeräte, welches bezüglich des Peripheriegeräts im Aktivbetriebszustand ist, sendet ferner in regelmäßigen Abständen Synchronisationssignale an das andere Steuergerät. Hierdurch wird sichergestellt, dass beide Steuergeräte im gleichen internen Zustand sind, so dass beim Ausfall des im Aktivbetriebszustand arbeitenden Steuergeräts das andere Steuergerät nahtlos die Steuerung der Peripheriegeräte übernehmen kann.

Dasjenige der Steuergeräte, welches bezüglich des Peripheriegeräts im Aktivbetriebszustand ist, sendet ferner in regelmäßigen Abständen Aktivitätssignale an das Peripheriegerät. Das Peripheriegerät kann also unabhängig von dem anderen Steuergerät feststellen, ob das momentan aktive Hauptsteuergerät noch funktionsfähig ist, indem es den regelmäßigen Eingang der Aktivitätssignale kontrolliert. Dies kann genutzt werden, um eine ungewollte gleichzeitige Aktivierung der beiden Steuergeräte zu vermeiden. Hierzu prüft dasjenige der Steuergeräte, welches bezüglich des Peripheriegeräts in Ruhezustand ist, beim Nichtempfangen von wenigstens einem der Synchronisationssignale innerhalb eines vorgegebenen Zeitraums vom aktiven Steuergerät, ob das Peripheriegerät innerhalb eines weiteren vorgegebenen Zeitraums ein Aktivitätssignal von dem Steuergerät im Aktivbetriebszustand empfangen hat. Das Steuergerät im Ruhebetriebszustand kann so entscheiden, ob das Nichtempfangen des wenigstens einen Synchronisationssignals auf einem Ausfall des Steuergeräts im Aktivbetriebszustand oder lediglich auf einem Ausfall der Synchronisation zwischen den beiden Steuergeräten beruht.

Wird bei dieser Prüfung festgestellt, dass das Peripheriegerät innerhalb des weiteren vorgegebenen Zeitraumes in der Tat noch Aktivitätssignale von dem Steuergerät in dem Aktivbetriebszustand empfangen hat, so verbleibt das Steuergerät in seinem Ruhebetriebszustand, da das aktive Steuergerät noch funktionsfähig ist und lediglich die Synchronisation ausgefallen ist. Hat das Peripheriegerät innerhalb des weiteren vorgegebenen Zeitraums allerdings kein Aktivitätssignal vom Steuergerät im Aktivbetriebszustand empfangen, so kann das Steuergerät im Ruhebetriebszustand in den Aktivbetriebszustand wechseln, da nun klar ist, dass das Ausbleiben der Synchronisationssignale in der Tat auf einem Ausfall des Steuergeräts im Aktivbetriebszustand beruht. Hierdurch wird zuverlässig vermieden, dass zeitgleich beide Steuergeräte in den Aktivbetriebszustand wechseln und hierdurch Konflikte im Peripheriegerät auslösen. Gleichzeitig kann bei einem derartigen Verfahren auf eine redundante Auslegung der Übertragung der Synchronisationssignale zwischen den Steuergeräten verzichtet werden, so dass ein Netzwerk zum Durchführen dieses Verfahrens besonders kostengünstig zu installieren ist.

Bei einer bevorzugten Ausführungsform des Verfahrens wird eine Mehrzahl von Peripheriegeräten verwendet. Bezüglich einer ersten Gruppe von Peripheriegeräten befindet sich das erste Steuergerät im Aktivbetriebszustand und das zweite Steuergerät im Ruhebetriebszustand. Bezüglich einer zweiten Gruppe von Peripheriegeräten befindet sich dagegen das erste Steuergerät im Ruhebetriebszustand und das zweite Steuergerät im Aktivbetriebszustand. In dieser Ausgestaltung des Verfahrens wird also nicht notwendigerweise eines der Steuergeräte als Hauptsteuergerät für alle Peripheriegeräte benutzt, während das andere Steuergerät lediglich als Backup dient. Die Steuerung der Peripheriegeräte wird vielmehr auf beide Steuergeräte aufgeteilt, wobei jedes Steuergerät als Backup zur Steuerung derjenigen Peripheriegeräte dient, die gerade vom anderen Steuergerät gesteuert werden. Damit kann zum Beispiel die Rechenleistung der beiden Steuergeräte optimal ausgenutzt werden, so dass die Leistungsfähigkeit eines mit einem derartigen Verfahren betriebenen Netzwerksbesonders gut ist. Beim Ausfall eines der Steuergeräte werden dann auf die beschriebene Art die Steuerungsaufgaben, die vorher vom ausgefallenen Steuergerät betreffend die von ihm gesteuerten Peripheriegeräte übernommen wurden, auf das andere Steuergerät übertragen, welches dann alle Peripheriegeräte steuert.

Bei einer weiteren bevorzugten Ausführungsform der Erfindung wechselt ein Steuergerät nur dann vom Ruhebetriebszustand in den Aktivbetriebszustand, wenn alle Peripheriegeräte, bezüglich derer sich das Steuergerät im Ruhebetriebszustand befindet, innerhalb des weiteren vorgegebenen Zeitraums kein Aktivitätssignal von dem Steuergerät, das sich bezüglich dieser Peripheriegeräte im Aktivbetriebszustand befindet, empfangen hat. Damit wird sichergestellt, dass selbst dann, wenn eines oder mehrere Peripheriegeräte fehlerhafte Informationen über den Zustand des aktiven Steuergeräts besitzen, keine fehlerhafte Aktivierung des im Ruhebetriebszustand arbeitenden Steuergeräts vorkommen kann.

Es kann jedoch auch zweckmäßig sein, wenn eines der Steuergeräte bereits dann in den Aktivitätszustand bezüglich aller Peripheriegeräte wechselt, wenn mindestens ein Peripheriegerät, bezüglich welchem sich das Steuergerät im Ruhebetriebszustand befindet, innerhalb des weiteren vorgegebenen Zeitraums kein Aktivitätssignal empfangen hat. Damit kann sichergestellt werden, dass eine fehlerhafte Information weiterer Peripheriegeräte bezüglich des Empfangens von Aktivitätssignalen nicht zu einem Steuerungsverlust führt.

Vorzugsweise sendet das wenigstens ein Peripheriegerät ferner Signale betreffend seinen Betriebszustand an die beiden Steuergeräte. Dadurch wird sichergestellt, dass auch das sich im Ruhezustand befindende Steuergerät jederzeit über den momentanen Zustand der Anlage und aller Peripheriegeräte besitzt, so dass es bei einem Ausfall des Hauptsteuergerätes sofort die Steuerung übernehmen kann, ohne dass zu Konflikten kommt.

Es ist dabei besonders zweckmäßig, wenn das Steuergerät im Ruhebetriebszustand der Peripheriegeräte auf die gleiche Weise verarbeitet wie das Steuergerät im aktiven Betriebszustand. Der Ruhebetriebszustand unterscheidet sich somit nur insofern vom Aktivbetriebszustand, als dass im Ruhebetriebszustand keine Steuersignale auf die Peripheriegeräte gesendet werden. Ansonsten stimmt der innere Zustand der beiden Steuergeräte überein, so dass es zu keiner Zeitverzögerung bei der Übernahme der Steuerfunktion durch das Steuergerät im Ruhebetriebszustand kommt.

Bei einer besonders bevorzugten Ausführungsform der Erfindung werden Signale zwischen den Steuergeräten und den Peripheriegeräten über separate und den jeweiligen Steuergeräten zugeordnete Leitungen übertragen. Mit anderen Worten sind nicht nur die Steuergeräte redundant ausgelegt, sondern auch die ihnen zugeordneten Leitungen, also das gesamte Netzwerk. Dies stellt eine besonders hohe Verfügbarkeit des Netzwerkes sicher, da somit nicht nur Ausfälle in einem Steuergerät, sondern auch Ausfälle im Leitungssystem des Netzwerkes kompensiert werden können.

Vorzugsweise wird zum Übertragen der Signale zwischen den Steuergeräten und dem wenigstens einem Peripheriegerät ein Feldbus verwendet. Hierbei handelt es sich um ein standardisiertes, echtzeitfähiges Ethernetnetzwerk, welches vorteilhafterweise einen besonders geringen Verkabelungsaufwand besitzt, besonders störungssicher ist und aufgrund der Standardisierung sowohl der Datenleitungen als auch der verwendeten Protokolle die Kooperation von verschiedensten Peripherie-und Steuergeräten erlaubt.

In einer weiteren bevorzugten Ausführungsform der Erfindung wird zum Übertragen der Synchronisationssignale zwischen den Steuergeräten eine von dem Feldbus verschiedene Datenleitung verwendet. Hierdurch kann sichergestellt werden, dass die Synchronisation der beiden Steuergeräte auch bei Störungen im Netzwerk oder bei einer besonders hohen Netzwerkbelastung reibungsfrei funktioniert.

Es ist ferner vorteilhaft, wenn bei einem Ausfall der Synchronisationssignale zwischen den Steuergeräten ein vorbestimmtes, als Hauptsteuergerät vorgesehenes Steuergerät bezüglich aller Peripheriegeräte in den Aktivbetriebszustand und das andere, als Backupsteuergerät vorgesehene Steuergerät bezüglich aller Peripheriegeräte in den Ruhebetriebszustand wechselt. Dies ist besonders zweckmäßig, wenn beim Ausfall der Synchronisation die Steuerungsaufgaben zwischen den Steuergeräten verteilt waren. Durch die Übertragung aller Steuerungsaufgaben auf ein einzelnes Steuergerät kann beim Ausfall der Synchronisation die zu steuernde Anlage ohne Redundanz weiterbetrieben werden, ohne dass es zu Konflikten aufgrund der fehlenden Synchronisation kommt.

Die Erfindung betrifft ferner ein Netzwerk mit zwei Steuergeräten und wenigstens einem Peripheriegerät. Jedes der Steuergeräte befindet sich bezüglich des Peripheriegeräts entweder in einem Aktivbetriebszustand, in welchem es Steueranweisungen an das Peripheriegerät sendet, oder in einem Ruhebetriebszustand, in welchem es keine Steueranweisungen an das Peripheriegerät sendet. Die Steuergeräte befinden sich hierbei bezüglich des Peripheriegeräts in jeweils im unterschiedlichen Betriebszuständen. Die Steuergeräte sind ferner dazu ausgelegt, im Aktivbetriebszustand in regelmäßigen Abständen Synchronisationssignale an das jeweils andere Steuergerät zu senden und im Aktivbetriebszustand in regelmäßigen Abständen Aktivitätssignale an das Peripheriegerät zu senden.

Die Steuergeräte sind darüber hinaus dazu ausgelegt, im Ruhebetriebszustand bei Nichtempfangen von wenigstens einem der Synchronisationssignale innerhalb eines vorgegebenen Zeitraums von dem jeweils anderen Steuergerät eine Prüfung durchzuführen, ob das Peripheriegerät innerhalb eines weiteren vorgegebenen Zeitraums ein Aktivitätssignal von dem Steuergerät im Aktivbetriebszustand empfangen hat und, falls dies nicht der Fall ist, vom Ruhebetriebszustand in den Aktivbetriebszustand bezüglich des Peripheriegerätes zu wechseln. Wie bereits anhand des erfindungsgemäßen Verfahrens beschrieben, kann in einem derartigen Netzwerk sichergestellt werden, dass bei einem Ausfall der Synchronisationssignale zwischen den Steuergeräten nicht unerwünschterweise beide Steuergeräte gleichzeitig in den Aktivbetriebszustand wechseln. Ein derartiges Netzwerk ist daher besonders betriebssicher und gleichzeitig hoch verfügbar.

Im Folgenden werden die Erfindung und ihre Ausführungsformen anhand der Zeichnungen näher erläutert. Es zeigen:
- FIG 1: ein schematisches Blockdiagramm eines Netzwerkes zum Durchführen eines Ausführungsbeispiels eines erfindungsgemäßen Verfahrens.
- FIG 2: eine schematische Darstellung der Informationsflüsse in einem Netzwerk bei der Durchführung eines Ausführungsbeispiels des erfindungsgemäßen Verfahrens und
- FIG 3: ein Ausführungsbeispiel eines erfindungsgemäßen Netzwerkes.

In einem im Ganzen mit 10 bezeichneten hoch verfügbaren Netzwerk zur Industrieautomatisierung sind zwei speicherprogrammierbare Steuereinheiten 12, 14 vorgesehen, die zum Steuern eines Peripheriegerätes 16 dienen. Die Steuereinheit 12 befindet sich hierbei in einem aktiven Betriebszustand, dient also als Master, während die Steuereinheit 14 in einem Ruhezustand eine Backupfunktion übernimmt. Über die nur schematisch angedeuteten Netzwerkverbindungen 18 kommuniziert die aktive Steuereinheit 12 über eine logische Verbindung 20 mit dem Peripheriegerät 16 und sendet Steuersignale an dieses. Im Gegenzug empfängt die aktive Steuereinheit 12 Zustandsinformationen vom Peripheriegerät 16.

Die Backupsteuereinheit 14 ist ebenfalls über eine logische Verbindung 22 dem Peripheriegerät 16 verbunden, sendet jedoch keine Steuersignale an dieses, erhält aber ebenfalls Zustandsinformationen vom Peripheriegerät 16. Die Backupsteuereinheit 14 ist dazu ausgelegt, im Falle des Ausfalls der aktiven Steuereinheit 12 die Steuerung des Peripheriegerätes 16 zu übernehmen.

Damit die Übergabe der Steuerungsfunktion zwischen den Steuereinheiten 12, 14 nahtlos erfolgen kann, sind die Steuereinheiten 12, 14 über eine Synchronisationsverbindung 24 miteinander verbunden. Hierdurch wird sichergestellt, dass die Steuereinheit 14 sich jederzeit im gleichen inneren Betriebszustand befindet wie die aktive Steuereinheit 12. Der Betriebszustand der Steuereinheit 14 unterscheidet sich lediglich dadurch vom Betriebszustand der Steuereinheit 12, dass die Steuereinheit 14 keine Steuersignale an das Peripheriegerät abgibt. Die Synchronisation zwischen den Steuereinheiten 12, 14 kann dabei durch die an sich bekannten Verfahren der Ereignissynchronisierung, Taktsynchronisierung oder Zyklussynchronisierung erfolgen.

Empfängt die Steuereinheit 14 keine Synchronisationssignale mehr von der aktiven Steuereinheit 12, so ist zunächst nicht klar, ob die Steuereinheit 12 tatsächlich ausgefallen ist, oder ob lediglich die Synchronisationsverbindung 24 fehlerhaft ist. Im letzteren Fall darf die Backupsteuereinheit 14 jedoch nicht die Steuerungsfunktion übernehmen, da in diesem Fall die beiden Steuereinheiten 12, 14 aktiv Steuersignale an das Peripheriegerät 16 senden würden. Hierdurch kann es zu Konflikten und zu undefinierten Zuständen im Netzwerk 10 oder im Peripheriegerät 16 kommen, welche eine zu steuernde Anlage beschädigen können.

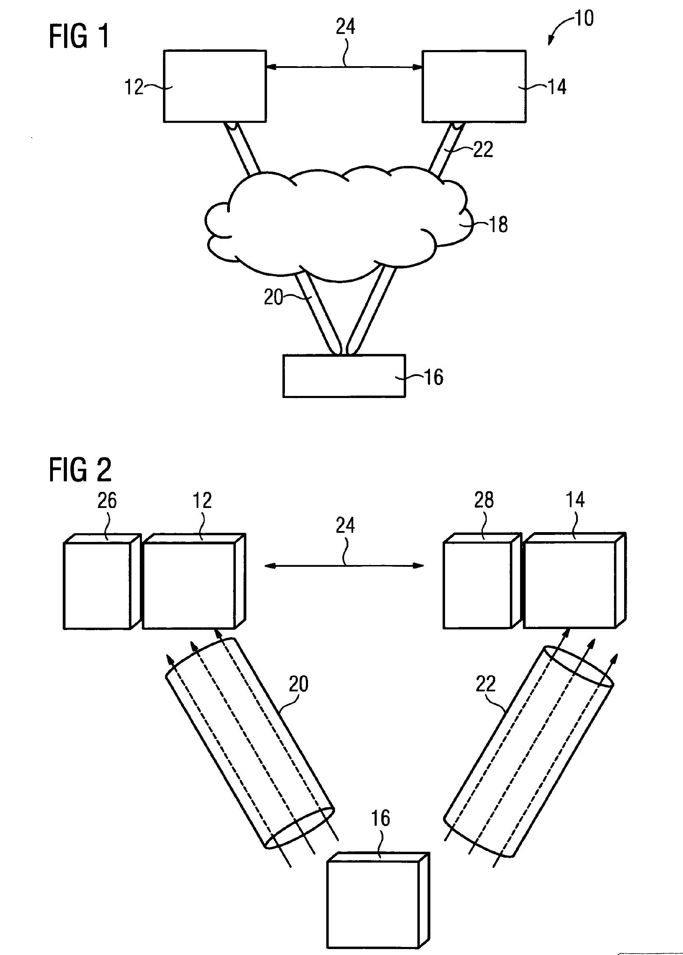

Um dies zu vermeiden, werden, wie in FIG 2 dargestellt, zusätzliche Signale zwischen den Steuereinheiten 12, 14, und dem Peripheriegerät 16 ausgetauscht. Die aktive Steuereinheit 12 sendet über ihr Netzwerkinterface 26 über die logische Verbindung 20 in regelmäßigen Zuständen Aktivitätssignale an das Peripheriegerät 16. Beim Empfang dieser Aktivitätssignale setzt das Peripheriegerät 16 ein Statusbit (Primary Present), welches anzeigt, dass das Steuergerät 12 noch aktiv ist. Bei der anfänglichen Übernahme der Steuerung des Peripheriegerätes 16 durch das Steuergerät 12 wird ferner ein weiteres Statusbit (selbst Primary) gesetzt, welches anzeigt, dass das Peripheriegerät 16 nun dem Steuergerät 12 zugeordnet ist. Während des Normalbetriebs werden über die logische Verbindung 20 Steuersignale des Steuergeräts 12 und Statusinformationen des Peripheriegeräts 16 zwischen dem Steuergerät 12 und dem Peripheriegerät 16 übertragen, so dass das Peripheriegerät 16 die gewünschten Funktionen ausführt.

Das Steuergerät 14 bleibt solange in seinem Backupzustand, bis es keine Synchronisationssignale vom aktiven Steuergerät 12 mehr empfängt. Nun muss geprüft werden, ob tatsächlich das aktive Steuergerät 12 ausgefallen ist, oder ob lediglich die Synchronisationsverbindung 24 nicht mehr funktioniert. Hierzu prüft nun das Steuergerät 14 für alle Peripheriegeräte 16, ob das Primary-Present-Bit noch gesetzt ist. Ist dieses nicht gesetzt, so weiß das Backupsteuergerät 14, dass in der Tat das aktive Steuergerät 12 und nicht die Synchronisationsverbindung 24 ausgefallen ist. Das Steuergerät 14 wird nun selbst zum Hauptsteuergerät und übernimmt die Steuerung des Steuergerätes 16. Gleichzeitig setzt es das ihm zugeordnete Selbst-Primary-Bit im Peripheriegerät 16, so dass dieses nun weiß, dass es dem Steuergerät 14 zugeordnet ist. Das Steuergerät 14 sendet nun regelmäßig Aktivitätssignale an das Peripheriegerät 16, so dass das Peripheriegerät 16 sein Primary-Present-Bit wieder setzt und der Normalbetrieb des Netzwerkes bezüglich der Steuerung des Peripheriegeräts 16 wieder hergestellt ist.

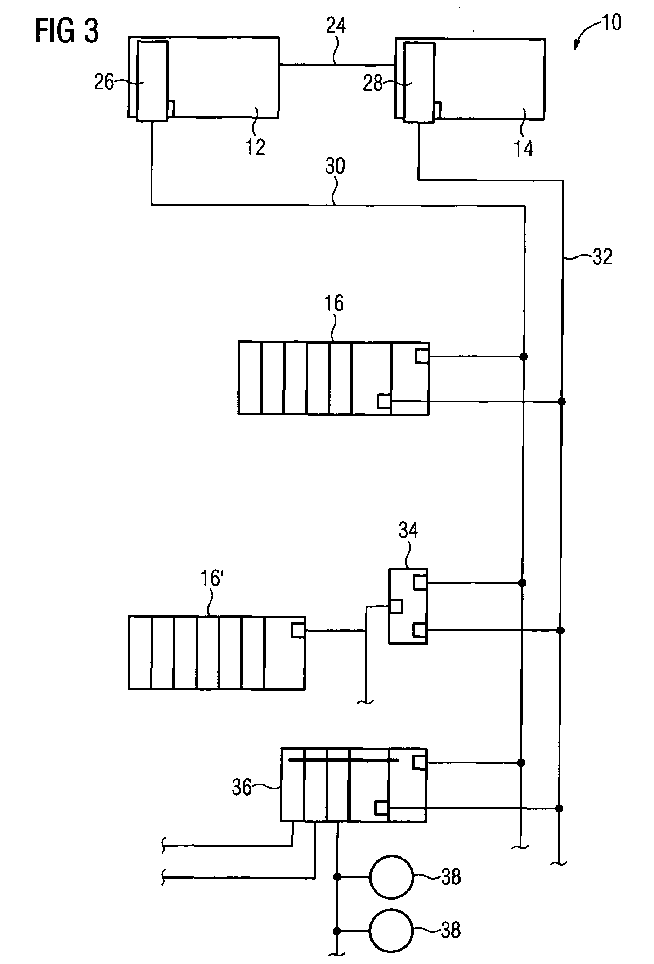

Die FIG 3 zeigt schließlich noch eine schematische Darstellung eines konkreten Netzwerkes zur Durchführung des beschriebenen Verfahrens. Das Steuergerät 12 und da Steuergerät 14 in diesem Netzwerk 10 sind über ihre Netzwerkcontroller 26, 28 mit jeweils eigenen Feldbusleitungen 30, 32 verbunden, welche wiederum mit dem direkt geschalteten Peripheriegerät 16 verbunden sind, welches auf die oben beschriebene Weise gesteuert wird.

Neben dem unmittelbar auf die Feldbusleitungen 30, 32 angebundenen Peripheriegerät 16 ist ein weiteres Peripheriegerät 16' vorhanden, welches über einen Y-Schalter 34 indirekt mit den Feldbusleitungen 30, 32 verbunden ist. Die Anbindung des Peripheriegerät 16' ist somit nicht redundant, lediglich der Schalter 34 ist redundant beschaltet und wird ebenfalls auf die oben beschriebene Art und Weise gesteuert. Über einen Wandler 36 können die Signale von den Feldbusleitungen 30, 32 schließlich noch auf weitere, nicht redundanten Peripheriegeräte 38 übertragen werden. Je nach den Ansprüchen an die Verfügbarkeit von Peripheriegeräten können diese also direkt oder indirekt mit den Feldbusleitungen 30, 32 verbunden werden. Bei indirekter Anbindung wird das beschriebene Verfahren auf der Ebene der Schalter 34, 36 durchgeführt, welche die Steuersignale an die nicht redundant angebundenen Steuergeräte 16' und 38 übertragen.

## Patentansprüche

1. Verfahren zum Betreiben eines Netzwerks (10) mit zwei Steuergeräten (12, 14) und wenigstens einem Peripheriegerät (16), bei welchem:
- jedes der Steuergeräte (12, 14) bezüglich des Peripheriegeräts (16) entweder in einem Aktivbetriebszustand, in welchem es Steueranweisungen an das Peripheriegerät (16) sendet, oder in einem Ruhebetriebszustand ist, in welchem es keine Steueranweisungen an das Peripheriegerät (16) sendet;
- die Steuergeräte (12, 14) bezüglich des Peripheriegeräts (16) immer in jeweils unterschiedlichen Betriebszuständen sind;
- dasjenige der Steuergeräte (12), welches bezüglich des Peripheriegeräts (16) im Aktivbetriebszustand ist, in regelmäßigen Abständen Synchronisationssignale an das andere Steuergerät (14) sendet;
- dasjenige der Steuergeräte (12), welches bezüglich des Peripheriegeräts (16) im Aktivbetriebszustand ist, in regelmäßigen Abständen Aktivitätssignale an das Peripheriegerät (16) sendet;
- das andere der Steuergeräte (14), welches bezüglich des Peripheriegeräts (16) im Ruhebetriebszustand ist, bei Nichtempfangen von wenigstens einem der Synchronisationssignale innerhalb eines vorgegebenen Zeitraums von dem Steuergerät (12), welches bezüglich des Peripheriegeräts (16) im Aktivbetriebszustand ist, eine Prüfung durchführt, ob das Peripheriegerät (16) innerhalb eines weiteren vorgegebenen Zeitraums ein Aktivitätssignal von dem Steuergerät im Aktivbetriebszustand empfangen hat und, falls dies nicht der Fall ist, vom Ruhebetriebszustand in den Aktivbetriebszustand bezüglich des Peripheriegeräts wechselt.

2. Verfahren nach Anspruch 1,
**dadurch gekennzeichnet, dass** eine Mehrzahl von Peripheriegeräten (16, 16', 38) vorgesehen ist, wobei sich bezüglich einer ersten Gruppe von Peripheriegeräten (16, 16', 38) das erste Steuergerät (12) im Aktivbetriebszustand und das zweite Steuergerät (14) im Ruhebetriebszustand befindet und sich bezüglich einer zweiten Gruppe von Peripheriegeräten (16, 16', 38) das erste Steuergerät (12) im Ruhebetriebszustand und das zweite Steuergerät (14) im Aktivbetriebszustand befindet.

3. Verfahren nach Anspruch 2,
**dadurch gekennzeichnet , dass** ein Steuergerät (12, 14) nur dann vom Ruhebetriebszustand in den Aktivbetriebszustand wechselt, wenn alle Peripheriegeräte (16, 16', 38), bezüglich derer sich das Steuergerät (12, 14) im Ruhebetriebszustand befindet, innerhalb des weiteren vorgegebenen Zeitraums kein Aktivitätssignal von dem Steuergerät (12, 14), das sich bezüglich dieser Peripheriegeräte im Aktivbetriebszustand befindet, empfangen hat.

4. Verfahren nach Anspruch 2,
**dadurch gekennzeichnet, dass** ein Steuergerät (12, 14) dann vom Ruhebetriebszustand in den Aktivbetriebszustand bezüglich aller Peripheriegeräte (16, 16', 18) wechselt, wenn wenigstens eines der Peripheriegeräte (16, 16', 38), bezüglich derer sich das Steuergerät (12, 14) im Ruhebetriebszustand befindet, innerhalb des weiteren vorgegebenen Zeitraums kein Aktivitätssignal von dem Steuergerät (12, 14), das sich bezüglich dieser Peripheriegeräte im Aktivbetriebszustand befindet, empfangen hat.

5. Verfahren nach einem der Ansprüche 1 bis 4,
**dadurch gekennzeichnet, dass** das wenigstens eine Peripheriegerät (16, 16', 38) Signale betreffend seinen Betriebszustand an die beiden Steuergeräte sendet.

6. Verfahren nach Anspruch 5,
**dadurch gekennzeichnet, dass** das Steuergerät (14) im Ruhebetriebszustand die Signale der Peripheriegeräte (16, 16', 38) auf die gleiche Weise verarbeitet wie das Steuergerät (12) im Aktivbetriebszustand.

7. Verfahren nach einem der Ansprüche 1 bis 6,
**dadurch gekennzeichnet, dass** Signale zwischen den Steuergeräten (12, 14) und den Peripheriegeräten (16, 16', 38) über separate, den jeweiligen Steuergeräten zugeordnete Leitungen (30, 32) übertragen werden.

8. Verfahren nach einem der Ansprüche 1 bis 7,
**dadurch gekennzeichnet, dass** zum Übertragen der Signale zwischen den Steuergeräten (12, 14) und dem wenigstens einen Peripheriegerät (16, 16', 38) ein Feldbus verwendet wird.

9. Verfahren nach einem der Ansprüche 1 bis 8,
**dadurch gekennzeichnet, dass** zum Übertragen der Synchronisationssignale zwischen den Steuergeräten (12, 14) eine von dem Feldbus (30, 32) verschiedene Datenleitung (24) verwendet wird.

10. Verfahren nach einem der Ansprüche 1 bis 9,
**dadurch gekennzeichnet, dass** bei Nichtempfangen wenigstens eines der Synchronisationssignale durch das Steuergerät (12, 14), welches sich bezüglich des Peripheriegeräts (16) im Ruhebetriebszustand befindet, und bei gleichzeitigem Empfangen von Aktivitätssignalen von dem Steuergerät (12, 14), welches sich bezüglich des Peripheriegeräts (16) im Aktivbetriebszustand befindet, durch das Peripheriegerät (16), ein vorbestimmtes Steuergerät (12, 14) bezüglich aller Peripheriegeräte (16) in den Aktivbetriebszustand und das andere der Steuergeräte (12, 14) bezüglich aller Peripheriegeräte (16) in den Ruhebetriebszustand wechselt.

11. Netzwerk (10) mit zwei Steuergeräten (12, 14) und wenigstens einem Peripheriegerät (16, 16', 38), wobei:
- jedes der Steuergeräte (12, 14) bezüglich des Peripheriegeräts (16, 16', 38) entweder in einem Aktivbetriebszustand, in welchem es Steueranweisungen an das Peripheriegerät (16, 16', 38) sendet, oder in einem Ruhebetriebszustand ist, in welchem es keine Steueranweisungen an das Peripheriegerät (16, 16', 38) sendet;
- die Steuergeräte (12, 14) bezüglich des Peripheriegeräts (16, 16', 38) immer in jeweils unterschiedlichen Betriebszuständen sind;
- die Steuergeräte (12, 14) dazu ausgelegt sind, im Aktivbetriebszustand in regelmäßigen Abständen Synchronisationssignale an das jeweils andere Steuergerät (12, 14) zu senden;
- die Steuergeräte (12, 14) dazu ausgelegt sind, im Aktivbetriebszustand in regelmäßigen Abständen Aktivitätssignale an das Peripheriegerät (16, 16', 38) zu senden;
- die Steuergeräte (12, 14) dazu ausgelegt sind, im Ruhebetriebszustand bei Nichtempfangen von wenigstens einem der Synchronisationssignale innerhalb eines vorgegebenen Zeitraums von dem jeweils anderen Steuergerät (12, 14) eine Prüfung durchzuführen, ob das Peripheriegerät (16, 16', 38) innerhalb eines weiteren vorgegebenen Zeitraums ein Aktivitätssignal von dem Steuergerät (12, 14) im Aktivbetriebszustand empfangen hat und, falls dies nicht der Fall ist, vom Ruhebetriebszustand in den Aktivbetriebszustand bezüglich des Peripheriegeräts (16, 16', 38) zu wechseln.

## Claims

1. Method for operating a network (10) with two control devices (12, 14) and at least one peripheral device (16), in which:
- In relation to the peripheral device (16), each of the control devices (12, 14) is either in an active operating state, in which it is sending control instructions to the peripheral device (16) or is in an idle operating state in which it is not sending any control instructions to the peripheral device (16);
- The control devices (12, 14) are always each in different operating states in relation to the peripheral device (16);
- That control device (12) which is in the active operating state in relation to the peripheral device (16) sends synchronisation signals at regular intervals to the other control device (14);
- That control device (12) which is in the active operating state in relation to the peripheral device (16), sends activity signals at regular intervals to the peripheral device (16);
- The other of the control devices (14) which is in the idle operating state in relation to the peripheral device (16), if it does not receive at least one of the synchronisation signals within a predetermined period of time from the control device (12) which is in the active operating state in relation to the peripheral device (16), carries out a check as to whether the peripheral device (16) has received an activity signal from the control device in the active operating state within a predetermined period of time and, if it has not, switches from the idle operating state into the active operating state in relation to the peripheral device.

2. Method according to claim 1,
**characterised in that**
a plurality of peripheral devices (16, 16', 38) is provided, whereby the first control device (12) is in the active operating state and the second control device (14) is in the idle operating state in relation to a first group of peripheral devices (16, 16', 38) and the first control device (12) is in the idle operating state and the second control device (14) is in the active operating state in relation to a second group of peripheral devices (16, 16', 38).

3. Method according to claim 2,
**characterised in that**
a control device (12, 14) only switches from the idle operating state into the active operating state when all peripheral devices (16, 16', 38) in relation to which the control device (12, 14) is in the idle operating state have not received any activity signal within the further predetermined period of time from the control device (12, 14) which is in the active operating state in relation to these peripheral devices.

4. Method according to claim 2,
**characterised in that**
a control device (12, 14) switches from the idle operating state into the active operating state in relation to all peripheral devices (16, 16', 18) if at least one of the peripheral devices (16, 16', 38) in relation to which the control device (12, 14) is in the idle operating state has not received any activity signal from the control device (12, 14), which is in the active operating state in relation to these peripheral devices within the predetermined period of time.

5. Method according to one of claims 1 to 4,
**characterised in that**
at least one peripheral device (16, 16', 38) sends signals relating to its operating state to the two control devices.

6. Method according to claim 5,
**characterised in that**
the control device (14) in the idle operating state processes the signals of the peripheral devices (16, 16', 38) in the same way as the control device (12) in the active operating state.

7. Method according to one of claims 1 to 6,
**characterised in that**
signals are transmitted between the control devices (12, 14) and the peripheral devices (16, 16', 38) over separate lines (30, 32) assigned to the respective control devices.

8. Method according to one of claims 1 to 7,
**characterised in that**
a field bus is used for transmitting the signals between the control devices (12, 14) and the at least one peripheral device (16, 16', 38).

9. Method according to one of claims 1 to 8,
**characterised in that**
a data line (24) differing from the field bus (30, 32) is used for transmitting the synchronisation signals between the control devices (12, 14).

10. Method according to one of claims 1 to 9,
**characterised in that,**
if at least one of the synchronisation signals is not received by the control device (12, 14) which is in the idle operating state in relation to the peripheral device (16) and if activity signals are received at the same time by the peripheral device (16) from the control device (12, 14) which is in the active operating state in relation to the peripheral device (16), a predetermined control device (12, 14) switches into the active operating state in relation to all peripheral devices (16) and the other of the control devices (12, 14) switches into the idle operating state in relation to all peripheral devices (16).

11. Network (10) with two control devices (12, 14) and at least one peripheral device (16, 16', 38), whereby:
- In relation to the peripheral device (16, 16', 38) each of the control devices (12, 14) is either in an active operating state in which it is sending control instructions to the peripheral device (16, 16', 38) or is in an idle operating state in which it is not sending any control instructions to the peripheral device (16, 16', 38);
- The control devices (12, 14) are always each in different operating states in relation to the peripheral device (16, 16', 38);
- The control devices (12, 14) are designed to send synchronisation signals at regular intervals in the active operating state to the other control device (12, 14) in each case;
- The control devices (12, 14) are designed to send activity signals at regular intervals in the active operating state to the peripheral device (16, 16', 38);
- The control devices (12, 14) are designed, if in the idle operating state they do not receive at least one of the synchronisation signals within a predetermined period of time from the other control device (12, 14) in each case, to carry out a check as to whether the peripheral device (16, 16', 38) has received an activity signal from the control device (12, 14) in the active operating state within a predetermined period of time and, if it has not, to switch from the idle operating state into the active operating state in relation to the peripheral device (16, 16', 38).

## Revendications

1. Procédé pour faire fonctionner un réseau ( 10 ) ayant deux appareils ( 12, 14 ) de commande et au moins un appareil ( 16 ) périphérique, dans lequel :
- chacun des appareils ( 12, 14 ) de commande est, rapporté à l'appareil ( 16 ) périphérique, soit dans un état de fonctionnement actif, dans lequel il envoie des instructions de commande à l'appareil ( 16 ) périphérique, soit dans un état de fonctionnement au repos, dans lequel il n'envoie pas d'instructions de commande à l'appareil ( 16 ) périphérique ;
- les appareils ( 12, 14 ) de commande, rapportés à l'appareil ( 16 ) périphérique, sont toujours dans des états respectifs de fonctionnement différents ;
- celui des appareils ( 12 ) de commande, qui, rapporté à l'appareil ( 16 ) périphérique, est dans l'état de fonctionnement actif, envoie à intervalles réguliers des signaux de synchronisation à l'autre appareil ( 14 ) de commande ;
- celui des appareils ( 12 ) de commande, qui, rapporté à l'appareil ( 16 ) périphérique, est dans l'état de fonctionnement actif, envoie à intervalles réguliers des signaux d'activité à l'appareil ( 16 ) périphérique ;
- l'autre des appareils ( 14 ) de commande, qui, rapporté à l'appareil ( 16 ) périphérique, est dans l'état de fonctionnement au repos, effectue, lorsqu'il ne reçoit pas au moins l'un des signaux de synchronisation dans un laps de temps prescrit de l'appareil ( 12 ) de commande, qui, rapporté à l'appareil ( 16 ) périphérique, est dans l'état de fonctionnement actif, un contrôle du point de savoir si l'appareil ( 16 ) périphérique a reçu dans un autre laps de temps prescrit un signal d'activité de l'appareil de commande dans l'état de fonctionnement actif et, si cela n'est pas le cas, passe de l'état de fonctionnement au repos à l'état de fonctionnement actif, rapporté à l'appareil périphérique.

2. Procédé suivant la revendication 1,
**caractérisé en ce que**
il est prévu une multiplicité d'appareils ( 16, 16', 38 ) périphériques, dans lequel, rapporté à un premier groupe d'appareils ( 16, 16', 38 ) périphériques, le premier appareil ( 12 ) de commande se trouve dans l'état de fonctionnement actif et le deuxième appareil ( 14 ) de commande se trouve dans l'état de fonctionnement au repos et, rapporté à un deuxième groupe d'appareils ( 16, 16', 38 ) périphériques, le premier appareil ( 12 ) de commande se trouve dans l'état de fonctionnement au repos et le deuxième ( 14 ) de commande se trouve dans l'état de fonctionnement actif.

3. Procédé suivant la revendication 2,
**caractérisé en ce que**
un appareil ( 12, 14 ) de commande ne passe de l'état de fonctionnement au repos à l'état de fonctionnement actif que lorsque tous les appareils ( 16, 16', 38 ) périphériques, par rapport auxquels l'appareil ( 12, 14 ) de commande se trouve à l'état de fonctionnement au repos, n'a pas reçu dans l'autre laps de temps prescrit de signal d'activité de l'appareil ( 12, 14 ) de commande, qui se trouve, rapporté à ces appareils périphériques, dans l'état de fonctionnement actif.

4. Procédé suivant la revendication 2,
**caractérisé en ce que**
un appareil ( 12, 14 ) de commande passe alors de l'état de fonctionnement au repos à l'état de fonctionnement actif, rapporté à tous les appareils ( 16, 16', 18 ) périphériques, lorsqu'au moins l'un des appareils ( 16, 16', 38 ) périphériques, par rapport auxquels l'appareil ( 12, 14 ) de commande se trouve à l'état de fonctionnement au repos, n'a pas reçu dans l'autre laps de temps prescrit de signal d'activité de l'appareil ( 12, 14 ) de commande, qui se trouve, rapporté à ces appareils périphériques, dans l'état de fonctionnement actif.

5. Procédé suivant l'une des revendications 1 à 4,
**caractérisé en ce que**
au moins un appareil ( 16, 16', 38 ) périphérique envoie des signaux concernant son état de fonctionnement aux deux appareils de commande.

6. Procédé suivant la revendication 5,
**caractérisé en ce que**
l'appareil ( 14 ) de commande prête à l'état de fonctionnement au repos les signaux des appareils ( 16, 16', 38 ) périphériques de la même façon que l'appareil ( 12 ) de commande à l'état de fonctionnement actif.

7. Procédé suivant l'une des revendications 1 à 6,
**caractérisé en ce que**
des signaux sont transmis entre les appareils ( 12, 14 ) de commande et les appareils ( 16, 16', 38 ) périphériques par des lignes ( 30, 32 ) distinctes associées aux appareils de commande respectifs.

8. Procédé suivant l'une des revendications 1 à 7,
**caractérisé en ce que**
pour la transmission des signaux entre les appareils ( 12, 14 ) de commande et le au moins un appareil ( 16, 16', 38 ) périphérique, on utilise un bus sur site.

9. Procédé suivant l'une des revendications 1 à 8,
**caractérisé en ce que**
pour la transmission des signaux de synchronisation entre les appareils ( 12, 14 ) de commande, on utilise une ligne ( 24 ) de données différente du bus ( 30, 32 ) sur site.

10. procédé suivant l'une des revendications 1 à 9,
**caractérisé en ce que**
si au moins l'un des signaux de synchronisation n'est pas reçu par l'appareil ( 12, 14 ) de commande, qui, rapporté à l'appareil ( 16 ) périphérique, se trouve dans l'état de fonctionnement au repos, et si sont reçus en même temps des signaux d'activité par l'appareil ( 12, 14 ) de commande, qui se trouve, rapporté à l'appareil ( 16 ) périphérique, dans l'état de fonctionnement actif, par l'appareil ( 16 ) périphérique, un appareil ( 12, 14 ) de commande déterminé à l'avance, rapporté à tous les appareils ( 16 ) périphériques, passe dans l'état de fonctionnement actif et l'autre des appareils ( 12, 14 ) de commande, rapporté à tous les appareils ( 16 ) périphériques, passe dans l'état de fonctionnement au repos.

11. Réseau ( 10 ) ayant des appareils ( 12, 14 ) de commande et au moins un appareil ( 16, 16', 38 ) périphérique, dans lequel :
- chacun des appareils ( 12, 14 ) de commande, rapporté à l'appareil ( 16, 16', 38 ) périphérique, se trouve soit dans un état de fonctionnement actif, dans lequel il envoie des instructions de commande à l'appareil ( 16, 16', 38 ) périphérique, soit dans un état de fonctionnement au repos, dans lequel il n'envoie pas d'instructions de commande à l'appareil ( 16, 16', 38 ) périphérique ;
- les appareils ( 12, 14 ) de commande, rapportés à l'appareil ( 16, 16', 38 ) périphérique, sont toujours dans des états respectifs de fonctionnement différents ;
- les appareils ( 12, 14 ) de commande sont conçus pour envoyer dans l'état de fonctionnement actif à intervalles réguliers des signaux de synchronisation à l'autre appareil ( 12, 14 ) de commande respectif ;
- les appareils ( 12, 14 ) de commande sont conçus pour envoyer dans l'état de fonctionnement actif à intervalles réguliers des signaux d'activité à l'appareil ( 16, 16', 38 ) périphérique ;
- les appareils ( 12, 14 ) de commande sont conçus pour effectuer dans l'état de fonctionnement au repos, s'il n'est pas reçu au moins l'un des signaux de synchronisation dans un laps de temps prescrit par l'autre appareil ( 12, 14 ) de commande respectif, un contrôle sur le point de savoir si l'appareil ( 16, 16', 38 ) périphérique a reçu dans un autre laps de temps prescrit un signal d'activité de l'appareil ( 12, 14 ) de commande dans l'état de fonctionnement actif, et si cela n'est pas le cas, pour passer de l'état de fonctionnement au repos à l'état de fonctionnement actif, rapporté à l'appareil ( 16, 16', 38 ) périphérique.
